# EUROPEAN PATENT SPECIFICATION

(11) **EP 3 009 215 B1**
(45) Date of publication and mention of the grant of the patent: **10.04.2019**
(21) Application number: 15166553.6
(22) Date of filing: 06.05.2015
(51) Int. Cl.: B23C 3/12, B23C 5/10, B23C 5/20, B23B 27/14, B23B 51/10

(54) **CHAMFERING CUTTER COMPRISING A DISPOSABLE CHAMFERING BLADE**
ANFASSCHNEIDWERKZEUG MIT AUSTAUSCHBARER ANFASKLINGE
OUTIL DE CHANFREINAGE AVEC LAME DE CHANFREINAGE JETABLE

(30) Priority: 16.10.2014 TW 103218303
(43) Date of publication of application: 20.04.2016
(73) Proprietor: Chang, Hsin-Tien, Taichung City (TW)
(72) Inventor: Chang, Hsin-Tien, Taichung City (TW)
(74) Representative: Viering, Jentschura & Partner mbB Patent- und Rechtsanwälte

(56) References cited:
- EP-A1- 2 532 461
- EP-A1- 2 902 143
- EP-A1- 3 094 438
- GB-A- 1 252 631
- JP-A- 2007 038 387
- US-A1- 2010 202 844
- US-B1- 7 540 696

## Description

### Field of the Invention

The present invention relates to a cutter comprising a disposable chamfering blade for trimming the rough edges of a workpiece by chamfering. An example of such a cutter according to the preamble of claim 1 is given in GB 1 252 631 A.

### Background of the Invention

A chamfering cutter is typically required for chamfering the rims of a hole drilled into a workpiece or for chamfering the edges of a workpiece, with a view to removing burrs at the rims or at the edges.

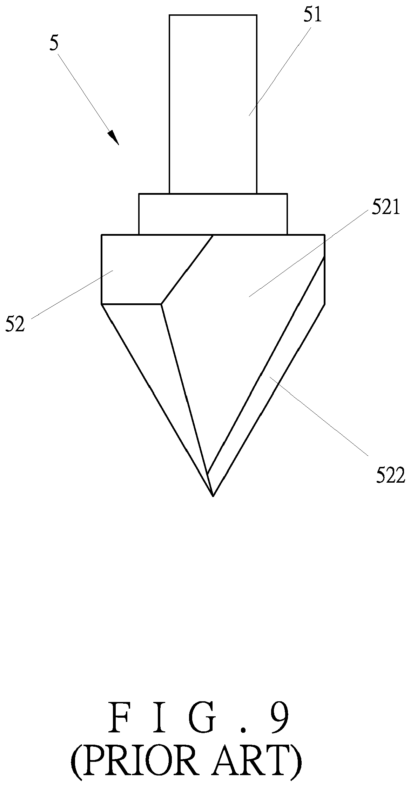

Referring to FIG. 9, a conventional chamfering cutter 5 includes a shaft 51 and a conical cutter head 52. The conical cutter head 52 is provided at one end of the shaft 51 and has at least one cutter groove 521. The cutter groove 521 is so formed that one of its sides forms a cutting edge 522 for cutting the rims of a hole in a workpiece to form chamfered rims or for cutting the edges of the workpiece to form chamfered edges.

Generally, the chamfering cutter 5 is made of high-speed steel (HSS) or other suitable cutter materials, and the cutter groove 521 is formed by grinding. As a result, formation of the cutter groove 521 is slow and costly, which in turn increases the production cost of the chamfering cutter 5. Moreover, if the cutting edge 522 of the chamfering cutter 5 breaks during operation, the entire cutter becomes useless and must be discarded. The conventional chamfering cutters, therefore, are not good for long-term use, and their consumable feature leads to a waste of material and high production cost.

Chamfering cutters with a disposable chamfering blade are also available. The disposable chamfering blade is connected to a cutter body, which usually has a large volume. More specifically, the disposable chamfering blade is provided on one side of the cutter body to form a single eccentric cutting edge. This arrangement, however, tends to give rise to eccentric wobbling or vibration of the blade, so the cutter body must be rotated at low speed. The single-cutting edge design also brings about a low chip removal rate. Consequently, the cutting speed and efficiency of such chamfering cutters are low.

EP 2 532 461 A1 discloses a cutting insert having a plurality of cutting elements thereon and a cutting tool therefore. The cutting insert includes at least one first insert supporting surface and a plurality of cutting elements. Each cutting element includes at least one cutting edge. Each cutting element projects outwardly at its base from the at least one insert supporting surface.

GB 1 252 631 A discloses a countersinking bit comprising a shank adapted to be gripped in a chuck and having a head part and a cutter body which is removable secured to the head part. At each end it has a cutting cone with a plurality of cutting edges and an intermediate cylindrical part with a shoulder in the vicinity of each of the two cutting cones.

US 2010/202844 A1 discloses a drill holding tool including a shaft and a drill-holding portion which has a recess defined axially in an outer periphery thereof so as to receive a flat center drill therein whereof one end protrudes from the distal end of the drill-holding portion. The center drill includes a positioning hole corresponding to the threaded hole in the recess and two semi-circular positioning notches in which the two positioning pieces are partially received. The center drill is a flat piece.

US 7,540,696 B1 discloses a spot drilling tool including a drill holder and an insert removably mounted to the holder. The insert is a standardized part configured to support a drill point in a predetermined position forward of the drill holder and centered on the rotational axis of the drill holder. The drill point has two flutes and two substantially conical land surfaces extending between the flutes.

EP 3 094 438 A1 discloses a central drill insert which has a bottom surface, a top surface, and a peripheral surface extending there between. At least three lead drill portions protrude outwards from the peripheral surface, each having a drill axis and a plurality of drill cutting edges.

JP 2007-038387 A discloses a mounting portion for detachably fixing a disposable tip mounted on a cutting tool holder to a tip seat provided in a cutting tool by a clamp means, and a mounting portion extending from the attaching portion in front of the attaching portion. The front end side of the shaft portion is formed as a body of a drill having a body of a hole machining rolling tool, for example, a cutting edge and a twist groove.

EP 2 902 143 A1 discloses a disposable multi-edge carving blade having a first end and a second end which are symmetrical to each other and are connected together so as to form a V-shaped end portion of the carving blade. The first end of the carving blade has a first side face defined thereon, and the second end of the carving blade has a second side face formed thereon. The carving blade also includes two chip removing grooves correspondingly arranged beside a distal end of the V-shaped end portion thereof, and each chip removing groove has a cutting face defined on a bottom end thereof and intersecting with a rotation axis of the carving blade so that at least two cutting edges are oppositely defined beside the rotation axis.

### Summary of the Invention

The conventional HSS chamfering cutters are disadvantaged by high production cost resulting from the costly and time-consuming formation of the cutter grooves. Besides, the conventional HSS chamfering cutters are not good for long-term use and must be discarded once the cutting edges are broken, meaning a waste of material and high production cost follow.

The present invention provides a chamfering cutter according to claim 1. The chamfering cutter is for trimming the rough edges of a workpiece by chamfering, and comprises a disposable chamfering blade. The disposable chamfering blade comprises a mounting hole through which the disposable chamfering blade can be locked to a cutter body; and a conical cutter head provided at an end of the disposable chamfering blade. The conical cutter head has a conical periphery circumferentially provided with a plurality of chip removing grooves. Each of the chip removing grooves has a side face formed as a cutting edge such that the disposable chamfering blade is formed with a plurality of said cutting edges. In a front view, the disposable chamfering blade is substantially parallelogram-shaped. In a side view, the conical cutter head extends beyond an upper surface of the disposable chamfering blade. In said side view, the conical cutter head does not extend beyond a lower surface of the disposable chamfering blade.

According to the present invention, chip removal rate can be increased manyfold due to the multiple cutting edges of the conical cutter head of the disposable chamfering blade. By changing the configuration of those conventional chamfering cutters designed for use with a disposable chamfering blade, the present invention reduces the time required for chamfering and thus contributes to increasing production capacity.

### Brief Description of the Drawings

The structure as well as a preferred mode of use and the advantages of the present invention will be best understood by referring to the following detailed description of an illustrative embodiment in conjunction with the accompanying drawings, in which:
FIG. 1 is a perspective view of a disposable chamfering blade according to an embodiment of the present invention;
FIG. 2 is a side view of the disposable chamfering blade in FIG. 1;

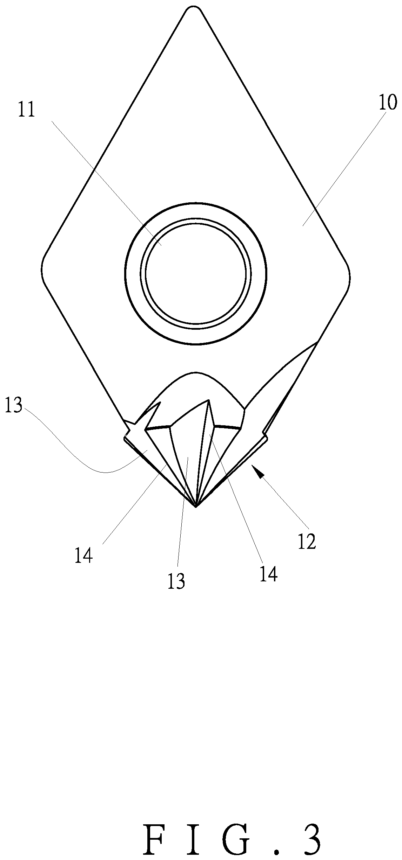

FIG. 3 is a front view of the disposable chamfering blade in FIG. 1;
FIG. 4 is yet a front view of the disposable chamfering blade in FIG. 1, wherein the blade is locked to a cutter body;
FIG. 5 is a side view of the assembly shown in FIG. 4;
FIG. 6 shows how the disposable chamfering blade in FIG. 1 is used to cut the rims of a hole in a workpiece to form chamfered rims;
FIG. 7 shows how the disposable chamfering blade in FIG. 1 is used to cut an edge of a workpiece to form a chamfered edge;
FIG. 8 shows that the taper of the conical cutter head of the disposable chamfering blade in an embodiment of the present invention can be changed to adapt to different working conditions; and
FIG. 9 shows a conventional chamfering cutter.

### Detailed Description of the Invention

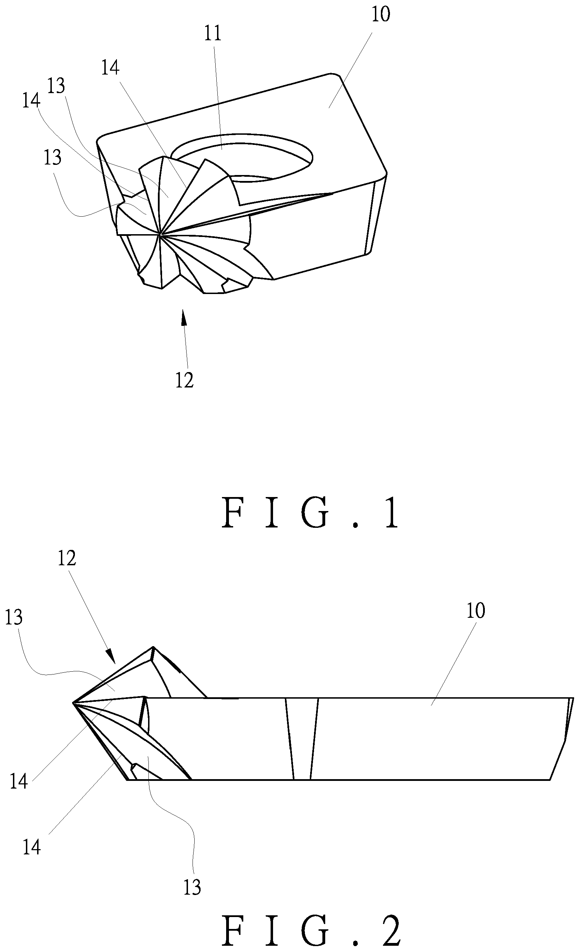

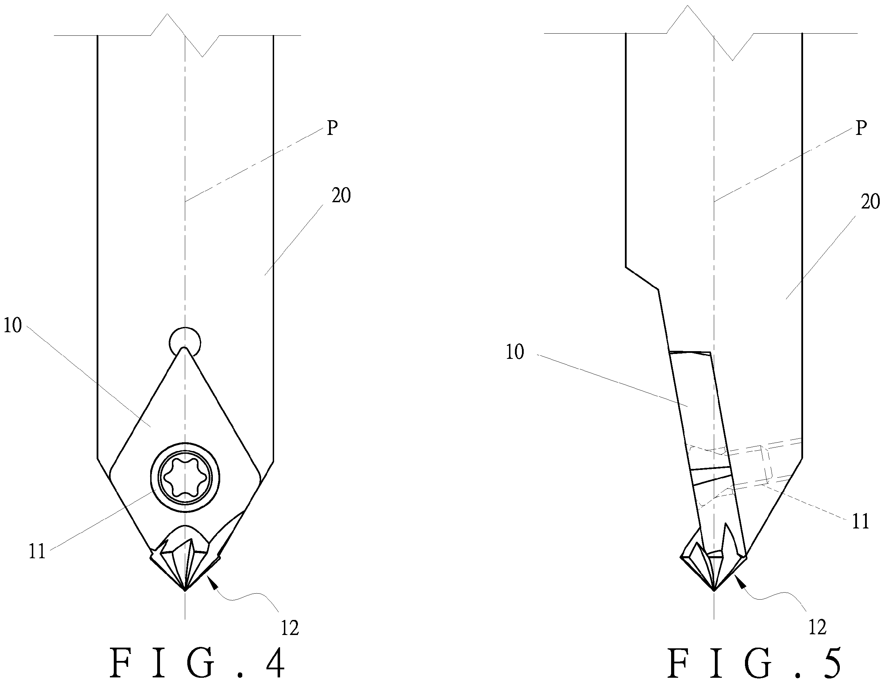

Referring to FIGS. 1∼3, a disposable chamfering blade 10 according to an embodiment of the present invention is provided with a mounting hole 11 through which the disposable chamfering blade 10 can be locked to a cutter body 20 (see FIGS. 4 and 5). A conical cutter head 12 is provided at one end of the disposable chamfering blade 10, and the conical periphery of the conical cutter head 12 is circumferentially provided with a plurality of chip removing grooves 13, wherein each of the chip removing grooves 13 has a side face formed as a cutting edge 14. Thus, the disposable chamfering blade 10 is formed with a plurality of cutting edges 14 for continuous cutting.

Please refer to FIGS. 4 and 5 respectively for a top view and a side view of the disposable chamfering blade 10 mounted to the cutter body 20. The conical cutter head 12 of the disposable chamfering blade 10 has multiple cutting edges 14, which is a pioneering design in the cutter industry. Moreover, as the cutter body 20 can be any of those for use with the conventional disposable carving tools, not only is it convenient for the user, but also the user is spared the cost for purchasing the cutter body 20. The disposable chamfering blade 10 is mounted to the cutter body 20 in a non-eccentric manner in which the disposable chamfering blade 10 lies on an axis P of the cutter body 20.

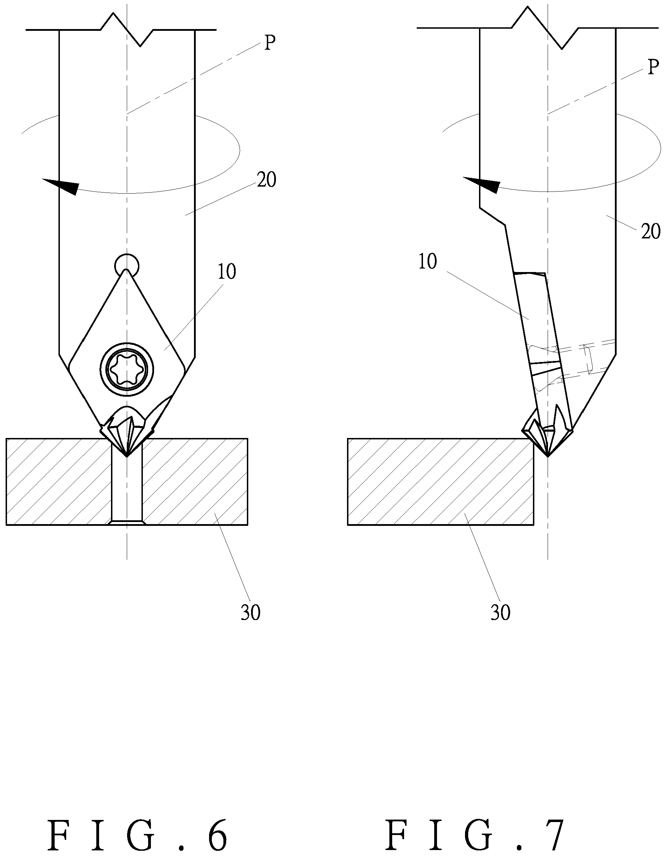

As shown in FIG. 6, the disposable chamfering blade 10 can be used to cut the rims of a hole in a workpiece 30 in order to form chamfered rims. Or, as shown in FIG. 7, the disposable chamfering blade 10 can be used to cut the edges of the workpiece 30 in order to form chamfered edges and thereby trim the burrs of the workpiece 30.

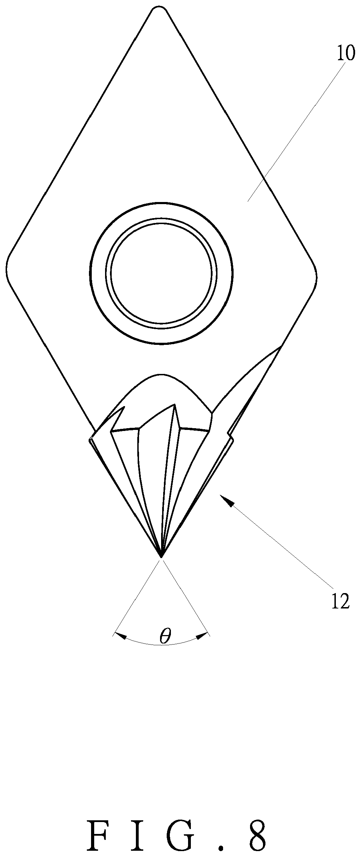

FIG. 8 shows the disposable chamfering blade 10 in a different configuration, in which the solid angle θ of the conical cutter head 12 has been changed to suit a different working condition.

The disposable chamfering blade 10 can be detached from the cutter body 20 for replacement. Hence, should the disposable chamfering blade 10 become dull or damaged, it can be rapidly replaced by a new one while the cutter body 20 remains in service. This particular feature of the present invention helps the user to reduce cost. Furthermore, as the cutter body 20 has a very simple structure, and the disposable chamfering blade 10 is so mounted that it lies on the axis of rotation P of the cutter body 20, the disposable chamfering blade 10 will not wobble eccentrically or vibrate when the cutter body 20 rotates at high speed. Also, the multiple cutting edges 14 on the disposable chamfering blade 10 can increase working speed by 2∼4 times and thus effectively enhance work efficiency.

According to the above, the present invention is different from the conventional chamfering cutters which are equipped with a disposable chamfering blade having only one cutting edge or which are made of high-speed steel or other cutter materials. The present invention can reduce production cost, increase chip removal rate manyfold, shorten the time required for chamfering, and thereby raise production capacity.

The embodiment described above is but one preferred embodiment of the present invention in industrial application. All equivalent changes made according to the appended claims fall within the scope of the present invention.

## Claims

1. Chamfering cutter for trimming the rough edges of a workpiece by chamfering, wherein the cutter comprises a disposable chamfering blade (10), comprising: a mounting hole (11) through which the disposable chamfering blade (10) can be locked to a cutter body (20); and a conical cutter head (12) provided at an end of the disposable chamfering blade (10), wherein the conical cutter head (12) has a conical periphery circumferentially provided with a plurality of chip removing grooves (13), and each of the chip removing grooves (13) has a side face formed as a cutting edge (14) such that the disposable chamfering blade (10) is formed with a plurality of said cutting edges (14), **characterised in that** in a front view, the disposable chamfering blade (10) is substantially parallelogram-shaped, **in that** in a side view, the conical cutter head (12) extends beyond an upper surface of the disposable chamfering blade (10), and **in that** in said side view, the conical cutter head (12) does not extend beyond a lower surface of the disposable chamfering blade (10).

2. Chamfering cutter, according to claim 1, wherein the cutter further comprises
a cutter body (20) having an axis of rotation (P); and wherein
the disposable chamfering blade (10) lies on the axis of rotation (P).

## Patentansprüche

1. Ein Anfaswerkzeug zum Beschneiden der rauen Ränder eines Werkstücks durch Anfasen, wobei dieses Werkzeug ein Einweg-Anfaswerkzeug (10) und weiter die folgenden Elemente umfasst: eine Montagebohrung (11), durch die das Einweg-Anfaswerkzeug (10) an einen Fräserkörper (20) befestigt werden kann; einen konischen Schneidkopf (12) an einem Ende des Einweg-Anfaswerkzeuges (10), wobei der konische Schneidkopf (12) eine konische Peripherie aufweist, die umlaufend mit mehreren spanentfernenden Rillen (13) gebildet ist, wobei jede der spanentfernenden Rillen (13) eine als eine Schneidkante (14) gebildete Seitenfläche aufweist, so dass das Einweg-Anfaswerkzeug (10) mit mehreren der Schneidkanten (14) gebildet ist, **dadurch gekennzeichnet, dass** in der Ansicht von vorne das Einweg-Anfaswerkzeug (10) im Wesentlichen die Form eines Parallelogramms aufweist, während der konische Schneidkopf (12) sich in einer Seitenansicht über eine obere Fläche des Einweg-Anfaswerkzeuges (10) erstreckt, wobei in dieser Seitenansicht sich der konische Schneidkopf (12) nicht über eine untere Fläche des Einweg-Anfaswerkzeuges (10) erstreckt.

2. Das Anfaswerkzeug nach Anspruch 1, wobei das Werkzeug weiter die folgenden Elemente umfasst:
einen Fräserkörper (20) mit einer Rotationsachse (P); und wobei
das Einweg-Anfaswerkzeug (10) auf einer Rotationsachse (P) liegt.

## Revendications

1. Fraise à chanfreiner pour couper les bords bruts d'une pièce par chanfreinage, la fraise comprenant une lame de chanfreinage jetable (10) comprenant : un trou de montage (11) à travers lequel la lame de chanfreinage jetable (10) peut être verrouillée sur un corps de fraise (20) ; et une tête de fraisage conique (12) prévue à une extrémité de la lame de chanfreinage jetable (10), la tête de fraisage conique (12) ayant une périphérie conique circonférentiellement pourvue d'une pluralité de rainures de retrait de copeaux (13), et chacune des rainures de retrait de copeaux (13) comporte une face latérale formée en tant que bord de coupe (14) de sorte que la lame de chanfreinage jetable (10) est formée d'une pluralité desdits bords de coupe (14), caractérisé en ce dans une vue frontale, la lame de chanfreinage jetable (10) est sensiblement en forme de parallélogramme, dans une vue latérale, la tête de fraisage conique (12) s'étend au-delà de la surface supérieure de la lame de chanfreinage jetable (10), et dans ladite vue latérale, la tête de fraisage conique (12) ne s'étend pas au-delà d'une surface inférieure de la lame de chanfreinage jetable (10).

2. Fraise à chanfreiner, selon la revendication 1, **caractérisée par le fait que** la fraise comprend en outre un corps de fraise (20) comportant un axe de rotation (P) ; et la lame de chanfreinage jetable (10) se trouve sur l'axe de rotation (P).
